(19)

Europäisches Patentamt
European Patent Office
Office européen des brevets

(11) **EP 3 533 904 A1**

(12) **EUROPEAN PATENT APPLICATION**
published in accordance with Art. 153(4) EPC

(43) Date of publication:
**04.09.2019 Bulletin 2019/36**

(21) Application number: **17864147.8**

(22) Date of filing: **07.08.2017**

(51) Int Cl.:
*C25B 1/04* *(2006.01)*      *C25B 9/00* *(2006.01)*

(86) International application number:
**PCT/CN2017/096154**

(87) International publication number:
**WO 2018/076886 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.10.2016   CN 201610947824**

(71) Applicant: **Zhongying Changjiang International New Energy Investment Co., Ltd.**
**Eastlake New-tech Development Zone**
**Wuhan**
**Hubei 430212 (CN)**

(72) Inventors:
• **CHEN, Yilong**
**Wuhan**
**Hubei 430212 (CN)**

• **ZHANG, Yanfeng**
**Wuhan**
**Hubei 430212 (CN)**
• **TAO, Leiming**
**Wuhan**
**Hubei 430212 (CN)**
• **DU, Fuying**
**Wuhan**
**Hubei 430212 (CN)**
• **ZHOU, Huanhuan**
**Wuhan**
**Hubei 430212 (CN)**
• **ZHENG, Xingcai**
**Wuhan**
**Hubei 430212 (CN)**

(74) Representative: **Zeuner Summerer Stütz**
**Nußbaumstrasse 8**
**80336 München (DE)**

(54) **HYDROGEN PRODUCTION MICROELECTRODE OPTICAL FIBER, OPTICAL CABLE, AND HYDROGEN PRODUCTION DEVICE FOR LIGHT SUPPLEMENTARY ELECTROLYSIS OF WATER**

(57)      A hydrogen production microelectrode optical fiber (1), optical cable (11), and hydrogen production device for light supplementary electrolysis of water. The microelectrode optical fiber (1) comprises a light guide core (2). The light guide core (2) has at least a first light guide section (A) and a second light guide section (B); in the first light guide section (A), the light guide core (2) is sequentially provided with a light absorption layer (3), an inner electrode layer (4), an insulating layer (5), a void layer (6), a proton exchange membrane (8) and an outer electrode layer (9) from inside to outside; and in the second light guide section (B), the light guide core (2) is provided with a conductive layer (10) that is connected with the inner electrode layer (4). The hydrogen production optical cable (11) comprises a protective casing (12) and microelectrode optical fibers (1) that are encapsulated and bundled therein. The hydrogen production device comprises an electrolyte bath (13), a hydrogen production optical cable (11), an inner electrode bus, an outer electrode bus, and an optical fiber distributing device. Each microelectrode optical fiber (1) in the hydrogen production optical cable (11) is distributed in the electrolyte (14); and the outer electrode layer (9) and the conductive layer (10) in each microelectrode optical fiber (1) are respectively connected with the inner electrode bus and the outer electrode bus. The hydrogen production device uses solar energy as a supplement to electric energy, effectively reducing electric energy consumption, increasing the space-time yield of hydrogen.

Fig. 1

**Description**

TECHNICAL FIELD

The disclosure relates to a hydrogen production device, and more particularly to an optical fiber, an optical cable, and a device for hydrogen production by photoelectric hydrolysis of water to produce hydrogen.

BACKGROUND

Hydrogen is a secondary energy source prepared by certain methods. There are many methods for producing hydrogen, among which the conventional hydrogen production methods mainly include reforming of fossil fuels, industrial by-product hydrogen production, and electrolysis of water.

Electrolysis of water is the decomposition of water into oxygen and hydrogen gas due to the use of electrical energy. The purity of hydrogen obtained by the electrolysis of water method can reach 99.98%, but this process consumes a lot of electrical energy. At present, the industrial electrolysis of $1Nm^3$ hydrogen consumes about 4 to 5 degrees of electricity, and its efficiency is about 50% to 70%. Considering that the current power supply is mainly coal-fired, the process of electrolyzing hydrogen also indirectly produces a large amount of greenhouse gas $CO_2$ and other pollutants.

Solar hydrogen production is a system for producing hydrogen by using solar energy, which mainly includes photocatalytic water splitting and a system for producing hydrogen by combining solar power and electrolyzed water. Compared to traditional technical methods, such systems have great potential to reduce the cost of electrolytic hydrogen. At present, the basic and applied research and development plans for materials science and systems engineering of electrochemical cells are being carried out around the world. The demonstration solar-hydrogen system has a conversion efficiency to date of up to 16%.

Chinese Patent Publication No. CN102534645A discloses a method of water electrolysis assisted by photocatalysis (WEAP). Based on an industrialized apparatus for producing hydrogen from electrolysis of water, the anode of the electrolytic cell is modified by using a photocatalytic material. The light source is irradiated to the anode, and a photocatalytic process is coupled in the process of electrolyzing water to realize hydrogen production through water electrolysis assisted by photocatalysis. The application organically couples photocatalysis with electrolyzed water to produce a synergistic effect, reducing the voltage of the electrolytic cell and the power consumption generated by hydrogen production. However, the related art only proposes the idea of photoelectric hydrogen production, and does not provide a device for hydrogen production that can be industrially applied.

SUMMARY

The disclosure provides an optical fiber, an optical cable, and a device for hydrogen production by photoelectric hydrolysis of water that are efficient and energy-saving in utilizing solar energy to supplement some of the energy needed for hydrolysis of water to produce hydrogen.

Disclosed is an optical fiber for hydrogen production by photoelectric hydrolysis of water, comprising a light guiding inner core. The light guiding inner core comprises at least a first light guiding segment and a second light guiding segment connected to the first light guiding segment. The first light guiding segment comprises a light-transmitting circumferential wall; the second light guiding segment comprises a light-transmitting or opaque circumferential wall; the first light guiding segment comprises, from the inside out, a light absorbing layer, an inner electrode layer, an insulating layer, a void layer, a proton exchange membrane, and an outer electrode layer. The void layer is formed between the insulating layer and the proton exchange membrane. The light absorbing layer is a photovoltaic material layer that is excited by light to generate electrons, and converts light energy transmitted from the light guiding inner core into electrical energy. The inner electrode layer communicates with the proton exchange membrane via a plurality of microelectrodes passing through the insulating layer and the void layer. The plurality of microelectrodes is evenly disposed around the inner electrode layer. The outer electrode layer is a porous conductive structure; the second light guiding segment of the light guiding inner core comprises a conductive layer; and the conductive layer is connected to the inner electrode layer.

In use, the first light guiding segment of the optical fiber is immersed in an electrolytic cell containing an electrolyte; the second light guiding segment and the outer electrode layer are respectively connected to the positive and negative electrodes of an external power supply or indirectly connected through a grounding manner to form an electrolyzer; the light energy introduced by the light guiding inner core excites the light absorbing layer to generate electrons to form a photovoltaic cell, which can supplement the consumed electrical energy.

The conductive layer is integrated with the inner electrode layer by a conductive material.

The light guiding inner core further comprises a third light guiding section connected to the second light guiding section; the third light guiding section comprises an opaque circumferential wall.

The inner electrode layer of one end of the first light guiding segment away from the second light guiding segment is covered and sealed with the insulating layer, or one end of the first light guiding segment away from the second light guiding segment is covered and sealed with the insulating layer. Insufficient sealing may result in a small amount of electrical energy loss due to leakage. However, the catalysis reaction of the internal electrode layer is mainly concentrated on the microelectrodes of which the exposed area is small, so that the leakage loss is small and the electrochemical reaction can still be implemented.

The light absorbing layer has a thickness of 50 nm to 20 $\mu$m, the inner electrode layer has a thickness of 50 nm to 50 $\mu$m, the insulating layer has a thickness of 10 nm to 50 $\mu$m, the microelectrode has a radius of 100 nm to 20 $\mu$m, and the proton exchange membrane has a thickness is 0.05-0.5 mm.

The light guiding inner core is of a material such as a quartz fiber, a plastic optical fiber, a crystal fiber, a polymer material light pipe, a glass light pipe, a glass fiber or a transparent mica fiber, which can transmit light with high-throughput along the surface. The light guiding inner core is of an elongated linear shape, solid or hollow, and its cross-sectional area may also be circular and rectangular (such as a light guiding tape).

The plurality of microelectrodes is a Platinum (Pt) electrode, a Palladium (Pd) electrode, or an iron (Fe) electrode containing NiS. The microelectrodes pass through the insulating layer by means of imprint lithography technology and communicate with the inner electrode layer. The microelectrodes can be regarded as an extension of the inner electrode layer, which increases the reaction area of the inner electrode and plays a catalytic role.

When the inner electrode layer or the outer electrode layer is used as a cathode, the material is Platinum (Pt), Palladium (Pd), Copper (Cu), aluminum (Al), Graphene, Titanium (Ti), Thallium (Tl), Chromium (Cr), or Gold (Au). When the electrode layer is used as an anode, the material is of C or Ni carrying a catalyst. The catalyst is an iron oxide, a cobalt oxide, a nickel oxide, or a mixture thereof. The optical fiber of the disclosure is divided into two types according to the position of the anode and the cathode: the first is that the cathode is inside (i.e., the inner electrode layer), the anode is outside (i.e., the outer electrode layer); the second is that the anode is inside and the cathode is outside; when connecting to an external power supply, the cathode is connected to the negative pole and the anode is connected to the positive pole.

The light absorbing layer is of an organic dye in the form of a divalent phosphonium salt of dicarboxybipyridine coated on the surface of the light guiding inner core through metal organic vapor deposition or chemical vapor deposition, preferably, chemical vapor deposition; or an organic dye is mixed with an organic viscose under vacuum to form the light absorbing layer on the surface of the light guiding inner core.

The light absorbing layer is of an inorganic semiconductor material coated on the surface of the light guiding core through vacuum spraying, vacuum sputtering, thermal evaporation or physical vapor deposition; the inorganic semiconductor material is $TiO_2$, ZnS, CdSe, MoS, CuInS or GaInP; preferably n-type $TiO_2$, ZnS or CdSe quantum dots having a particle diameter of 5 to 10 nm, and the three-dimensional scale is on the order of nanometers (0.1 to 100 nm).

The insulating layer is of silicon dioxide, silicon nitride, polyimide or parylene.

The proton exchange membrane is a perfluorosulfonic acid membrane (Nifion membrane), a sulfonated polystyrene membrane, a modified perfluorosulfonic acid polymer membrane, or 1-butyl-3-methylimidazolium trifluoromethanesulfonate membrane.

The electrolyte is water, an acidic solution, an alkaline solution or an aqueous solution containing an electrolytic activator; the acidity and basicity of the electrolyte shall be based on the bearing capacity of the proton exchange membrane.

To overcome the problem that a single fiber is too thin, the disclosure also provides an optical cable for hydrogen production by photoelectric hydrolysis of water, comprising a protective sleeve and a plurality of optical fibers axially disposed in the protective sleeve.

The plurality of optical fibers in the protective sleeve are closely arranged together. The advantage of the arrangement is that after the outer layer of the optical cable is cut open, the connection of all the optical fibers to the external power supply can be realized by directly or indirectly connecting the outermost optical fiber to the external power supply. This simplifies the connection of the optical fibers to the power supply.

The disclosure also provides a device for hydrogen production by photoelectric hydrolysis of water, which comprises an electrolytic cell, an optical cable, an internal electrode converger, an external electrode converger and a fiber dispersing device. The optical cable extends into the electrolytic cell to electrolyze water to produce hydrogen; one end of the first light guiding segment of the optical fiber away from the second light guiding segment is exposed out of the protective sleeve of the optical cable; one end of the second light guiding segment of the optical fiber away from the first light guiding segment is exposed out of the protective sleeve of the optical cable; the first light guiding segment of the optical fiber is dispersed by the fiber dispersing device and immersed into the electrolyte, and the outer electrode layer of the first light guiding segment is electrically connected to the external electrode converger; the second light guiding segment of the optical fiber is disposed outside the electrolytic cell, and the conductive layer on the second light guiding segment is electrically connected to the internal electrode converger.

A plurality of optical cables is disposed above the electrolytic cell in arrays.

The fiber dispersing device comprises an upper aperture plate and a lower aperture plate fixedly disposed on an upper part and a lower part of the electrolytic cell, respectively. The upper aperture plate and the lower aperture plate each comprise a plurality of through holes in arrays corresponding to each other. The first light guiding segment of each of the optical fibers is fixed on the upper aperture plate and the lower aperture plate via an upper through hole and a lower through hole opposite to the upper through hole, respectively.

The upper aperture plate is insulated; the lower aperture plate is conductive and used as the external electrode converger connected to the outer electrode layer of the first light guiding segment of each optical fiber through the lower through hole. The internal electrode converger is a copper ring sheathed on one end of the second light guiding segment of the optical fiber, and is in contact with the conductive layer.

The electrolytic cell is provided with a defoaming net.

Design principle

To determine whether an electrochemical process has practical economic value, the conversion rate, current efficiency, power consumption and space time yield are measured and evaluated. By introducing new materials, optimizing structural design and improving index parameters, the method of hydrogen production from electrolysis of water is of great economic value.

To explain the work principle of the hydrogen production device of the disclosure, the principle of electrolyzed water is given below:

1) Reaction principle

When water is electrolyzed in an acidic solution,

$$\text{Cathode: } 2H^+ + 2e \rightarrow H_2 \qquad \varphi^\theta = 0.0V$$
$$\text{Anode: } H_2O \rightarrow 1/2O_2 + 2H+ +2e \qquad \varphi^\theta = 1.23V$$

When water is electrolyzed in an alkaline solution,

$$\text{Cathode: } 2H_2O + 2e \rightarrow H_2 + 2OH^- \qquad \varphi^\theta = -0.83V$$
$$\text{Anode: } 2OH^- \rightarrow 1/2O_2 + H_2O + 2e \qquad \varphi^\theta = 0.4V$$

Total electrode reaction:

$$H_2O \rightarrow H_2 + 1/2O_2 \qquad \varphi^\theta = 1.23V$$

2) Voltage of electrolytic cell

Theoretical decomposition voltage $E_d$
Oxygen overpotential $h_{oxygen}$
Hydrogen overpotential $h_{hydrogen}$
Ohmic pressure drop of solution IR solution $IR_{solution}$
Ohmic pressure drop of diaphragm IR diaphragm $IR_{diaphragm}$
Bubble effect pressure drop IR gas $IR_{gas}$
Ohmic voltage drop of the electrode $IR_u$

$$\text{Cell voltage (total) } V = E_d + h_{oxygen} + h_{hydrogen} + \sum IR$$

The equation indicates that when the current efficiency is constant, the magnitude of the voltage determines how much power is consumed.

When the reaction conditions are constant, the decomposition voltage $E_d$ of hydrogen produced by electrolysis of water is a fixed value and is mainly supplied by an electric field. The photocatalytic material is used to give the electrolysis electrode the certain voltage compensation, and the supplemental energy is provided by the solar energy to reduce the power consumption.

The overpotential of hydrogen and oxygen is related to the material. Choosing a low hydrogen overpotential and low oxygen overpotential material can reduce the power consumption. Due to low hydrogen and oxygen overpotential materials such as Pt, Pd, Co, Ni, Cu and other metal materials, most of them are precious metals and expensive. The size of the microelectrodes is very small and the amount of material used is small.

Ohmic Pressure Drop IR of Solution: Reduces solution resistance by using a "zero gap" proton exchange membrane.

Effect of bubble pressure drop IR: The porous material is used to reduce the surface tension of the bubble and reduce the amount of bubble generation, thereby reducing the effect pressure drop of the bubble.

Electrode ohmic voltage drop IRu, from the relationship between current and electrode radius

$$i = nFc^o D[2r^2(\frac{p}{Dt})^{1/2} + 2p\,r]$$

,

it can be seen that when the current reaches a steady state, the smaller the electrode radius, the smaller the current. At this point, the electrode ohmic voltage drop can be ignored and no further voltage debugging is required. The reference electrode can be omitted and the design space of the electrolytic cell can be saved.

Use microelectrode, membrane, porous material and other techniques to reduce the design reactor cell volume V; Using a plurality of microelectrode array arrangements, electrons are transferred along the metal surface, increasing the electrode area A, increasing the space time yield A/V value, and increasing the amount of product obtained per unit volume of the electrolytic cell per unit time.

Advantages of the disclosure are summarized as follows: 1) using microelectrodes, proton exchange membranes and porous technology to improve the efficiency of electrical energy; using solar energy to supplement electrical energy, reducing power consumption and increasing space-time yield. 2) The diameter of the optical fiber is small, and the specific surface area of the electrode reaction is large, which can reduce the amount of materials used, reduce the cost, and solve the uneconomic problem of the conventional electrolyzed water. 3) The hydrogen production device comprises a plurality of hydrogen production cables in arrays on an electrolytic cell, or can be used as an integrated module to realize large-scale application of hydrogen production by electrolysis of water. 4) The hydrogen production device can be run at a relatively high current density and a low voltage of electrolytic cell, electrolysis of 1 $Nm^3$ of hydrogen requires about 1 degree of electrical energy. The electrical energy efficiency reaches 90%, and the space-time yield A/V can reach 200 $cm^{-1}$. 5) The electrodes are in the form of optical fiber and optical cable, which is easy to mass-produce, easy to use, and can increase or decrease the scale of hydrogen production as needed.

BRIEF DESCRIPTION OF DRAWINGS

FIG. **1** is a schematic diagram of a device for hydrogen production by photoelectric hydrolysis water in examples 1 to 4.

FIG. **2** is a cross-sectional view of an optical cable of the device for hydrogen production of FIG. **1.**

FIG. **3** is a longitudinal cross-sectional view of the optical fiber in FIG. **2.**

FIG. **4** is a cross-sectional view of a first light guiding segment of the optical fiber of FIG. **3.**

FIG. **5** is a top view of an upper/lower aperture plate in FIG. **1.**

Fig. **6** is a top view of a device for hydrogen production by photoelectric hydrolysis of water in example **5.**

FIG. **7** is a schematic diagram showing an electrolysis principle of a single optical fiber of FIG. **3.**

In the drawings, the following reference numbers are used: optical fiber 1, first light guiding segment A, second light guiding segment B, third light guiding segment C, light guiding inner core 2, light absorbing layer 3, inner electrode layer 4, insulating layer 5, void layer 6, microelectrode 7, proton exchange membrane 8, outer electrode layer 9, conductive layer 10, optical cable 11, protective sleeve 12, electrolytic cell 13, electrolyte 14, copper ring connected to cable interface 15, auxiliary positioning net 16, upper aperture plate 17, lower aperture plate 18, through hole 19, defoaming net 20, gas outlet 21, water inlet 22, water outlet 23, wastewater outfall 24, external power supply 25, wire 26.

DETAILED DESCRIPTION

The disclosure will be further described in detail below with reference to the drawings and specific examples.

**Example 1**

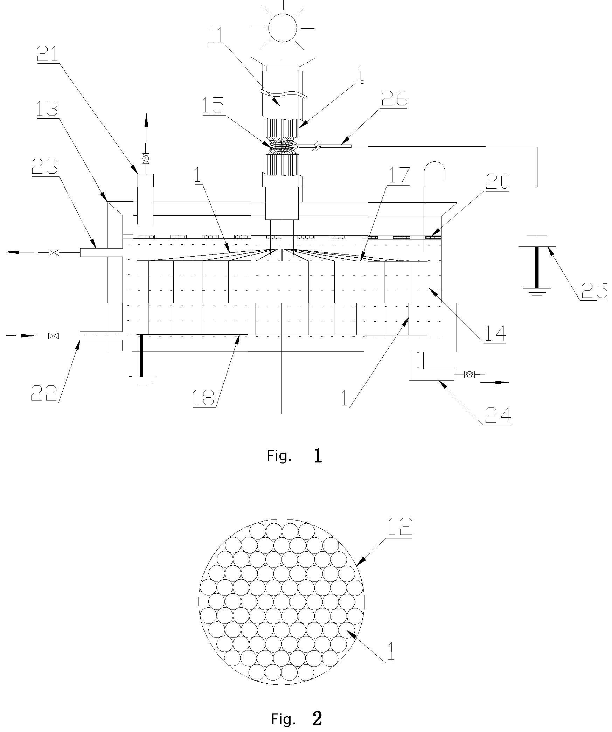

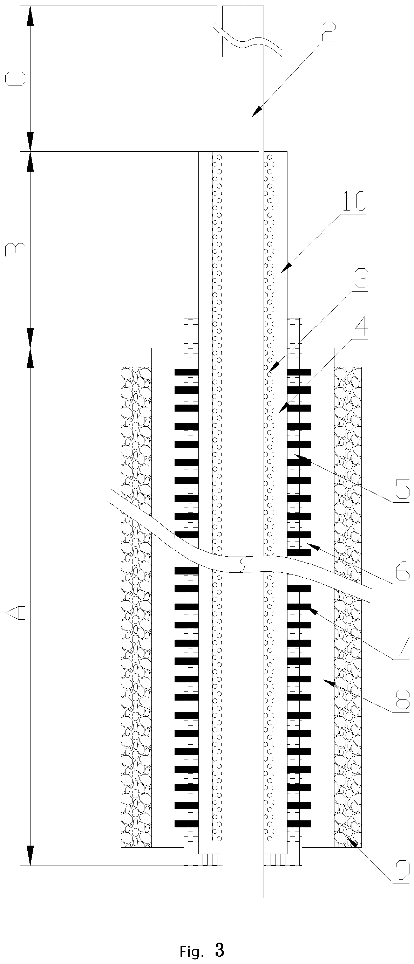

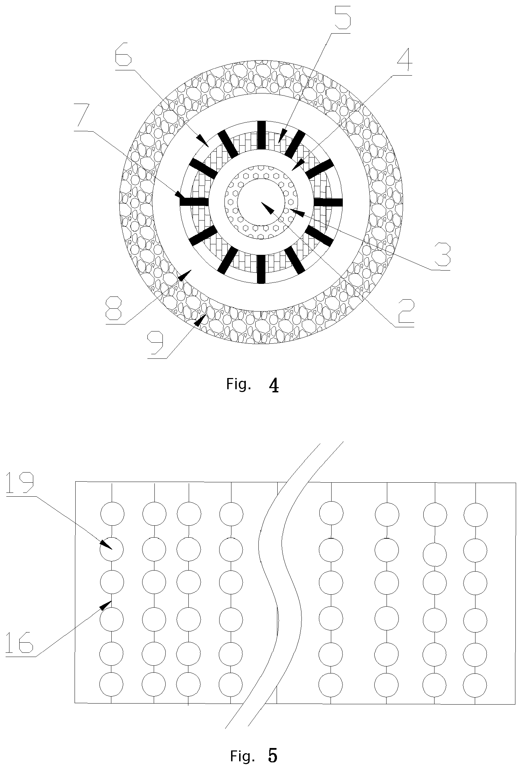

As shown in FIG. **1** to FIG. **5**, the device for hydrogen production by photoelectric hydrolysis of water provided in this example comprises an electrolytic cell 13, an optical cable 11, an internal electrode converger, an external electrode converger, and an optical fiber dispersing device. The various parts are specified as follows:
The optical cable 11 comprises a protective sleeve 12 and a plurality of bundled optical fibers 1 axially arranged in the protective sleeve 12.
The optical fiber 1 comprises a light guiding inner core 2, and the light guiding inner core 2 is sequentially divided into three parts: a first light guiding segment A, a second light guiding segment B, and a third light guiding segment C.
The first light guiding segment of the light guiding inner core 2 comprises a light-transmitting circumferential wall; the second and third light guiding segments comprises an opaque circumferential wall. The first light guiding segment A of the light guiding inner core 2 comprises, from the inside to the outside: a light absorbing layer 3, an inner electrode layer 4, an insulating layer 5, a proton exchange membrane 8 and an outer electrode layer 9; and a void layer 6 is formed between the insulating layer 5 and the proton exchange membrane 8. The inner electrode layer 4 communicates with the proton exchange membrane 8 via a plurality of microelectrodes 7 passing through the insulating layer 5 and the void layer 6. The plurality of microelectrodes 7 are arranged around the inner electrode layer 4 in arrays. The outer electrode layer 9 is a porous conductive structure. The inner electrode layer 4 at the front end of the first light guiding segment A is covered and sealed by the insulating layer 5. The light guiding inner core 2 is provided with a conductive layer 10 in the second light guiding segment B, and the conductive layer 10 is obtained by extending the inner electrode layer 4 to the second light guiding segment B. The light absorbing layer 3 remains in the second light guiding section B for ease of production and manufacturing. That is, the second light guiding segment B comprises the portions corresponding to the inner electrode layer 4 and inside the inner electrode layer 4 of the first light guiding segment A, and the portions corresponding to the insulating layer 5 and outside the insulating layer 5 of the first light guiding segment A are removed. The third light guiding segment C comprises only the light guiding inner core 2.
The light guiding inner core 2 is made of a quartz fiber having a high-throughput transmission characteristic of light along the surface, and an anti-reflection membrane is plated on the portion C of the third light guiding segment. The outer electrode layer 9 serves as an anode, and the material thereof is selected to be a porous carbon layer capable of carrying an iron oxyhydroxide catalyst. The inner electrode layer 4 serves as a cathode, and vacuum sputtering a layer of conductive Cu having a thickness of 500 nm for transmitting a power supply current and collecting an electron current generated by the light absorbing layer 3. The n-type $TiO_2$ was selected as the material of the light absorbing layer 3, and a light absorbing layer 3 having a thickness of 500 nm was formed by vacuum spraying on the light guiding core 2. The material of the insulating layer 5 was selected to be silicon dioxide and had a thickness of 1 $\mu$m. The material of the microelectrode 7 was selected to be Pt, and the radius was set to 100 nm. The microelectrodes 7 distributed in an array in the insulating layer 5 are prepared by imprint lithography technology. The proton exchange membrane 8 selects a Nifion membrane having a thickness of 0.1 mm, which functions to allow proton conduction and to isolate oxygen and hydrogen. The optical cable 11 penetrates and is fixed from the top of the electrolytic cell 13, and one end of the first light guiding segment A is immersed in the electrolyte 14 in the electrolytic cell 13. A portion of the first light guiding segment A and the second light guiding segment B on the protective sleeve 12 of the optical cable 11 is cut to expose the optical fiber 1. Each of the optical fibers 1 of the first light guiding segment A is dispersed and immersed in the electrolytic 14 by an optical fiber dispersing device, and the outer electrode layer 9 of each of the optical fibers 1 is electrically connected to the external electrode converger. In the second light guiding segment B, the conductive layer 10 of each optical fiber 1 is electrically connected to the internal electrode converger.
The optical fiber dispersing device comprises an upper aperture plate 17 and a lower aperture plate 18 that are fixedly disposed on the upper part and the lower part of the electrolytic cell 13. The upper aperture plate 17 and the lower aperture plate 18 are provided with a plurality of through holes 19 which are vertically arranged correspondingly in an array. The first light guiding segment of each of the optical fibers 1 passes through the upper and lower through holes 19 and is fixed thereto.
The upper aperture plate 17 is an insulator; the lower aperture plate 18 is an electrical conductor used as an external electrode converger connected to the outer electrode layer on the outer surface of the first light guiding segment of each optical fiber through the through hole thereon; then it is connected to the external power source 25 via a wire 26. The internal electrode converger is a copper ring connected to the cable interface and sheathed on the second light guiding segment of the bundled optical fiber, and is in contact with the conductive layer on the outer surface thereof. The cable interface copper ring 15 is further connected to the external power source 25 via a wire 26. The copper ring connected to cable interface 15 is connected to the external power supply 25 via a wire 26.

The optical fiber dispersing device is composed of an upper aperture plate 17, a lower aperture plate 18, and a through hole 19. An auxiliary positioning net 16 is disposed between the upper aperture plate 17 and the lower aperture plate 18. The optical fiber 1 passing through its mesh is equivalent to a multilayer array orifice plate, which enhances the stability of the optical fiber 1 between the two orifice plates.

The electrolytic cell 13 is further provided with a gas outlet 21, a water inlet 22, a water outlet 23, a wastewater outfall 24, and a defoaming net 20. The substances such as $H_2$ and $O_2$ produced by electrolysis are output from the gas outlet 21 and further sent to the gas separation system for separation.

To test the working characteristics of the devices, a comparative experiment of hydrogen production by electrolysis of water was carried out under the conditions of no solar irradiation N and sunlight irradiation Y. The experimental lighting conditions were sunlight, and the light intensity was 80,000 lx. The results are as follows:

**Table 1 Working characteristics of hydrogen production by microelectrode electrolysis**

| Sunlight | Current / density mA·cm$^{-2}$ | Voltage/V | Temperature/ °C | Pressure/atm | Hydrogen purity /% | Oxygen purity /% | Proton exchange membrane | Voltage efficiency /% | Specific energy consumption/ kWhm$^3$ H$^2$ | Space-time yield |
|---|---|---|---|---|---|---|---|---|---|---|
| N | 1080 | 1.42 | 25 | 1 | 99.9 | 99.8 | Nafion | 87 | 3.4 | 200 |
| Y | 1080 | 0.45 | 25 | 1 | 99.9 | 99.8 | Nafion | 89 | 1.07 | 200 |

Table 1 shows that higher purity hydrogen can be produced with higher efficiency in a low voltage environment under conditions of light supplementation with electrons.

**Example 2**

The device for hydrogen production by photoelectric hydrolysis of water is the same as that of the example 1 except that the light guiding inner core 2 is made of a flat light guiding strip and the material of the light absorbing layer 3 is selected as a 5 nm CdSe quantum dot.

To test the working characteristics of the above devices, a comparative experiment of hydrogen production by electrolysis of water was carried out under the conditions of no solar irradiation N and sunlight irradiation Y. The experimental lighting conditions were sunlight, and the light intensity was 80,000 1x. The results are as follows:

Table 2 Working characteristics of hydrogen production by microelectrode electrolysis

| Sunlight | Current density / mA·cm$^{-2}$ | Voltage/V | Temperature/ °C | Pressure/atm | Hydrogen purity /% | Oxygen purity /% | Proton exchange membrane | Voltage efficiency /% | Specific energy consumption/ kWhm$^3$H$^2$ | Space-time yield |
|---|---|---|---|---|---|---|---|---|---|---|
| N | 1080 | 1.42 | 25 | 1 | 99.9 | 99.8 | Nafion | 87 | 3.4 | 200 |
| Y | 1080 | 0.36 | 25 | 1 | 99.9 | 99.8 | Nafion | 89 | 0.87 | 200 |

Table **2** shows that higher purity hydrogen can be produced with higher efficiency in a low voltage environment under conditions of light supplementation with electrons.

**Example 3**

The device for hydrogen production by photoelectric hydrolysis of water provided in this example is the same as that of Example 1, except that the material of the internal electrode layer 4 is replaced by graphene.

To test the working characteristics of the above devices, a comparative experiment of hydrogen production by electrolysis of water was carried out under the conditions of no solar irradiation N and sunlight irradiation Y. The experimental lighting conditions were sunlight, and the light intensity was 80,000 1x. The results are as follows:

**Table 3 Working characteristics of hydrogen production by microelectrode electrolysis**

| Sunlight | Current density / mA·cm$^{-2}$ | Voltage/V | Temperature/°C | Pressure /atm | Hydrogen purity /% | Oxygen purity /% | Proton exchange membrane | Voltage efficiency /% | Specific energy consumption/kWhm$^3$H$^2$ | Space-time yield |
|---|---|---|---|---|---|---|---|---|---|---|
| N | 1080 | 1.50 | 25 | 1 | 99.9 | 99.8 | Nafion | 82.1 | 3.6 | 200 |
| Y | 1080 | 0.42 | 25 | 1 | 99.9 | 99.8 | Nafion | 80 | 1.0 | 200 |

Table **3** shows that higher purity hydrogen can be produced with higher efficiency in a low voltage environment under conditions of light supplementation with electrons.

**Example 4**

The device for hydrogen production by photoelectric hydrolysis of water for the example is the same as that of the example 1 except that the material 8 of the microelectrode 8 is a Fe electrode containing NiS.

To test the working characteristics of the above devices, a comparative experiment of hydrogen production by electrolysis of water was carried out under the conditions of no solar irradiation N and sunlight irradiation Y. The experimental lighting conditions were sunlight, and the light intensity was 80,000 1x. The results are as follows:

**Table 4 Working characteristics of hydrogen production by microelectrode electrolysis.**

| Sunlight | Current density / mA·cm$^{-2}$ | Voltage/V | Temperature/°C | Pressure/atm | Hydrogen purity /% | Oxygen purity /% | Proton exchange membrane | Voltage efficiency /% | Specific energy consumption/ kWhm$^3$ H$^2$ | Space-time yield |
|---|---|---|---|---|---|---|---|---|---|---|
| N | 1080 | 1.42 | 25 | 1 | 99.9 | 99.8 | Nafion | 87 | 3.4 | 200 |
| Y | 1080 | 0.42 | 25 | 1 | 99.9 | 99.8 | Nafion | 86 | 1.0 | 200 |

EP 3 533 904 A1

Table **4** shows that higher purity hydrogen can be produced with higher efficiency in a low voltage environment under conditions of light supplementation with electrons.

**Example 5**

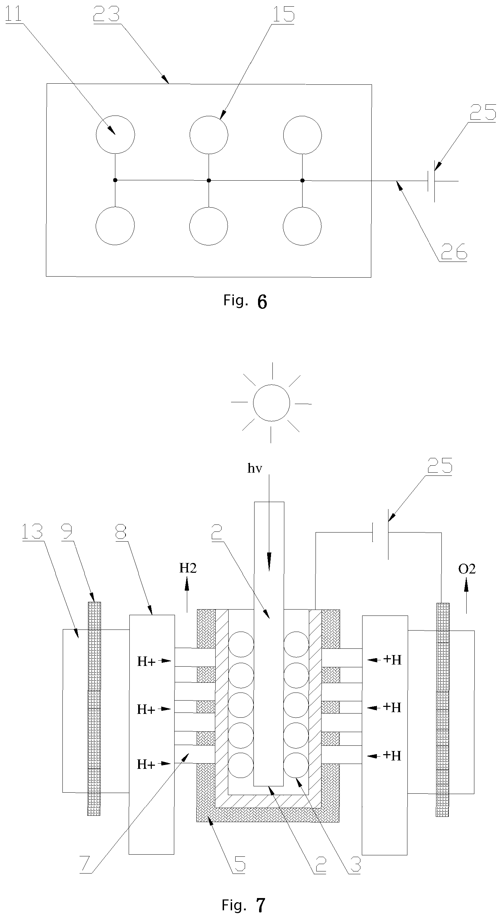

As shown in FIG. **6**, the device for hydrogen production by photoelectric hydrolysis of water provided in this example is the same as that in Example 1, except that the number of optical cables 11 is six, and the array distribution (3×2) is on the electrolytic cell 13.

Working principle:

To facilitate the description of the working process in the above example, an electrolytic cell formed by a single light guiding inner core 2 as a research object is shown in FIG.**7**.
The working process is as follows:
To facilitate the description of the working process of the above example, a single light guiding inner core 2 is taken as a research object, and the electrolytic cell formed thereof is shown in FIG.**7**.

1) The light guiding inner core 2 absorbs light energy in the third light guiding segment C and transmits the light energy to the light absorbing layer 3 of the first light guiding segment A. The light absorbing layer 3 absorbs light energy and generates electrons, which are then transferred to the cathode (internal electrode layer 4). The negative electrode of the external power supply 25 also delivers electrons to the cathode.

2) The water in the electrolyte 14 loses electrons on the anode (the outer electrode layer 9) and generates oxygen and protons, the protons are transferred to the microelectrode 7 through the proton exchange membrane 8, and the protons are combined with electrons on the microelectrode 7 to generate hydrogen gas. Oxygen escapes from the porous anode and hydrogen escapes from the void layer 6. The electrons lost on the anode are transferred to the anode of the external power source 25.

3) The mixed gas of hydrogen and oxygen collected by the electrolytic cell 13 is further separated by a gas separation device.

**Claims**

1. An optical fiber for hydrogen production by photoelectric hydrolysis of water, comprising: a light guiding inner core (2); the light guiding inner core (2) comprising at least a first light guiding segment (A) and a second light guiding segment (B) connected to the first light guiding segment (A); the first light guiding segment (A) comprising a light-transmitting circumferential wall; the second light guiding segment (B) comprising a light-transmitting or opaque circumferential wall; wherein:

   the first light guiding segment (A) comprises, from the inside out, a light absorbing layer (3), an inner electrode layer (4), an insulating layer (5), a void layer (6), a proton exchange membrane (8), and an outer electrode layer (9); the void layer (6) is formed between the insulating layer (5) and the proton exchange membrane (8); the light absorbing layer (3) is a photovoltaic material layer that is excited by light to generate electrons, and converts light energy transmitted from the light guiding inner core (2) into electrical energy; the inner electrode layer (4) communicates with the proton exchange membrane (8) via a plurality of microelectrodes (7) passing through the insulating layer (5) and the void layer (6); the plurality of microelectrodes (7) is evenly disposed around the inner electrode layer (4); the outer electrode layer (4) is a porous conductive structure; and
   the second light guiding segment (B) of the light guiding inner core (A) comprises a conductive layer (10); and the conductive layer (10) is connected to the inner electrode layer (4).

2. The fiber of claim 1, wherein the conductive layer (10) is integrated with the inner electrode layer (4) by a conductive material.

3. The fiber of claim 1, wherein the light guiding inner core (2) further comprises a third light guiding section (C) connected to the second light guiding section (B); the third light guiding section (C) comprises an opaque circumferential wall.

4. The fiber of claim 1, wherein the inner electrode layer (4) of one end of the first light guiding segment (A) away from the second light guiding segment (B) is covered and sealed with the insulating layer (5).

5. The fiber of claim 1, wherein the light absorbing layer (3) has a thickness of 50 nm to 20 $\mu$m, the inner electrode layer (4) has a thickness of 50 nm to 50 $\mu$m, the insulating layer (5) has a thickness of 10 nm to 50 $\mu$m, the microelectrode (7) has a radius of 100 nm to 20 $\mu$m, and the proton exchange membrane (8) has a thickness is 0.05-0.5mm.

6. The fiber of any one of claims 1-5, wherein the light guiding inner core (2) is of a material such as a quartz fiber, a plastic optical fiber, a crystal fiber, a polymer material light pipe, a glass light pipe, a glass fiber or a transparent mica fiber.

7. The fiber of any one of claims 1-5, wherein the plurality of microelectrodes (7) is platinum (Pt) electrode, a palladium (Pd) electrode, or an iron (Fe) electrode containing NiS.

8. The fiber of any one of claims 1-5, wherein the microelectrodes (7) pass through the insulating layer (5) by means of imprint lithography technology and communicate with the inner electrode layer (4).

9. The fiber of any one of claims 1-5, wherein when the inner electrode layer (4) or the outer electrode layer (9) is used as a cathode, the material is Platinum (Pt), Palladium (Pd), Copper (Cu), aluminum (Al), Graphene, Titanium (Ti), Thallium (Tl), Chromium (Cr), or Gold (Au); when the electrode layer is used as an anode, the material is of C or Ni carrying a catalyst; and the catalyst is an iron oxide, a cobalt oxide, a nickel oxide, or a mixture thereof.

10. The fiber of any one of claims 1-5, wherein the light absorbing layer (3) is of an organic dye in the form of a divalent phosphonium salt of dicarboxybipyridine coated on the surface of the light guiding inner core (2) through metal organic vapor deposition or chemical vapor deposition; or an organic dye is mixed with an organic viscose under vacuum to form the light absorbing layer (3) on the surface of the light guiding inner core (2).

11. The fiber of any one of claims 1-5, wherein the light absorbing layer (3) is of an inorganic semiconductor material coated on the surface of the light guiding core (2) through vacuum spraying, vacuum sputtering, thermal evaporation or physical vapor deposition; the inorganic semiconductor material is $TiO_2$, ZnS, CdSe, MoS, CuInS or GaInP.

12. The fiber of claim 11, wherein the inorganic semiconductor material is n-type $TiO_2$, ZnS or CdSe quantum dots having a particle diameter of 5 to 10 nm.

13. The fiber of any one of claims 1-5, wherein the insulating layer (5) is of silicon dioxide, silicon nitride, polyimide or parylene.

14. The fiber of any one of claims 1-5, wherein the proton exchange membrane (8) is a perfluorosulfonic acid membrane, a sulfonated polystyrene membrane, a modified perfluorosulfonic acid polymer membrane, or 1-butyl-3-methylimidazolium trifluoromethanesulfonate membrane.

15. An optical cable for hydrogen production by photoelectric hydrolysis of water, comprising a protective sleeve (12) and a plurality of optical fibers (1) of any one of claims 1-5 which are axially disposed in the protective sleeve (12).

16. A device for hydrogen production by photoelectric hydrolysis of water, comprising an electrolytic cell (13), an optical cable (11) of claim 15, an internal electrode converger, an external electrode converger, and a fiber dispersing device, the optical cable (11) extending into the electrolytic cell (13) to electrolyze water to produce hydrogen; wherein:

one end of the first light guiding segment (A) of the optical fiber (1) away from the second light guiding segment (B) is exposed out of the protective sleeve (12) of the optical cable (11); one end of the second light guiding segment (B) of the optical fiber (1) away from the first light guiding segment (A) is exposed out of the protective sleeve (12) of the optical cable (11);
the first light guiding segment (A) of the optical fiber (1) is dispersed by the fiber dispersing device and immersed into the electrolyte (14), and the outer electrode layer (9) of the first light guiding segment (A) is electrically connected to the external electrode converger; and
the second light guiding segment (B) of the optical fiber (1) is disposed outside the electrolytic cell (13), and the conductive layer (10) on the second light guiding segment (B) is electrically connected to the internal electrode converger.

17. The device of claim 16, wherein a plurality of optical cables (11) is disposed above the electrolytic cell (13) in arrays.

18. The device of claim 16, wherein the fiber dispersing device comprises an upper aperture plate (17) and a lower aperture plate (18) fixedly disposed on an upper part and a lower part of the electrolytic cell (13), respectively; the upper aperture plate (17) and the lower aperture plate (18) each comprise a plurality of through holes (19) in arrays corresponding to each other; the first light guiding segment (A) of each of the optical fibers (1) is fixed on the upper aperture plate (17) and the lower aperture plate (18) via an upper through hole (19) and a lower through hole opposite to the upper through hole (19), respectively.

19. The device of claim 18, wherein the upper aperture plate (17) is insulated; the lower aperture plate (18) is conductive and used as the external electrode converger connected to the outer electrode layer (9) of the first light guiding segment (B) of each optical fiber (1) through the lower through hole (19); the internal electrode converger is a copper ring (15) sheathed on one end of the second light guiding segment (B) of the optical fiber (1), and is in contact with the conductive layer (10).

20. The device of claim 16, wherein electrolytic cell (13) is provided with a defoaming net (20).

Fig. 1

Fig. 2

Fig. 3

Fig. 4

Fig. 5

Fig. 6

Fig. 7

# INTERNATIONAL SEARCH REPORT

| International application No. |
|---|
| PCT/CN2017/096154 |

### A. CLASSIFICATION OF SUBJECT MATTER

C25B 1/04 (2006.01) i; C25B 9/00 (2006.01) i

According to International Patent Classification (IPC) or to both national classification and IPC

### B. FIELDS SEARCHED

Minimum documentation searched (classification system followed by classification symbols)

C25B

Documentation searched other than minimum documentation to the extent that such documents are included in the fields searched

Electronic data base consulted during the international search (name of data base and, where practicable, search terms used)

WPI, EPODOC, CNPAT, CNKI: 光纤，光缆，电解水，氢，光催化，电极，吸光，吸收, optical, fiber, cable, electrolyze, electrolysis, water, hydrogen, photocatalysis, electrode, absorbent, light

### C. DOCUMENTS CONSIDERED TO BE RELEVANT

| Category* | Citation of document, with indication, where appropriate, of the relevant passages | Relevant to claim No. |
|---|---|---|
| PX | CN 106435636 A (ZHONGYING CHANG JIANG INTERNATIONAL NEW ENERGY INVESTMENT CO., LTD.), 22 February 2017 (22.02.2017), description, paragraphs 0007-0026 | 1-20 |
| PX | CN 206244886 U (ZHONGYING CHANG JIANG INTERNATIONAL NEW ENERGY INVESTMENT CO., LTD.), 13 June 2017 (13.06.2017), description, paragraphs 0007-0026 | 1-20 |
| A | CN 203960354 U (WANG, Kequan), 26 November 2014 (26.11.2014), description, paragraphs 0012-0014, and figures 1-3 | 1-20 |
| A | CN 102534645 A (EAST CHINA UNIVERSITY OF SCIENCE AND TECHNOLOGY et al.), 04 July 2012 (04.07.2012), entire document | 1-20 |
| A | WO 2006130920 A1 (MONASH UNIVERSITY), 14 December 2006 (14.12.2006), entire document | 1-20 |
| A | CN 104465842 A (GUANGXI UNIVERSITY), 25 March 2015 (25.03.2015), entire document | 1-20 |

☐ Further documents are listed in the continuation of Box C. ☒ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 November 2017 | 10 November 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>ZHOU, Xiaomo<br><br>Telephone No. (86-10) 62413980 |

Form PCT/ISA/210 (second sheet) (July 2009)

## INTERNATIONAL SEARCH REPORT
Information on patent family members

| | International application No. |
|---|---|
| | PCT/CN2017/096154 |

| Patent Documents referred in the Report | Publication Date | Patent Family | Publication Date |
|---|---|---|---|
| CN 106435636 A | 22 February 2017 | None | |
| CN 206244886 U | 13 June 2017 | None | |
| CN 203960354 U | 26 November 2014 | None | |
| CN 102534645 A | 04 July 2012 | None | |
| WO 2006130920 A1 | 14 December 2006 | None | |
| CN 104465842 A | 25 March 2015 | CN 104465842 B | 22 February 2017 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 102534645 A